# EUROPEAN PATENT SPECIFICATION

(11) **EP 0 870 944 B1**
(45) Date of publication and mention of the grant of the patent: **19.06.2002**
(21) Application number: 98106177.3
(22) Date of filing: 03.04.1998
(51) Int. Cl.: F16D 43/202

(54) **Torque limiting coupling with adjustable intervention threshold**
Drehmomentbegrenzungskupplung mit steuerbarer Drehmomentbegrenzung
Accouplement limiteur de couple à limite réglable

(30) Priority: 10.04.1997 IT MO970063; 12.02.1998 IT MO980003 U
(43) Date of publication of application: 14.10.1998
(73) Proprietor: Comer Group S.p.A., 42046 Villanova di Reggiolo (Reggio Emilia) (IT)
(72) Inventor: Brunazzi, Achille, 42040 S. Vittoria (Prov. Reggio Emilia) (IT); Prospero, Roberto, 37126 Verona (IT)
(74) Representative: Modiano, Guido, Dr.-Ing.

(56) References cited:
- EP-A- 0 543 142
- DE-B- 1 026 579
- DE-C- 19 538 351
- FR-A- 2 429 929
- FR-A- 2 615 256
- GB-A- 849 516
- US-A- 2 238 583
- US-A- 3 132 730

## Description

The present invention relates to a torque limiting coupling with adjustable intervention threshold.

Many torque limiters have long been known and are used to control the transmission of force between a driving element and a driven element.

In particular, in the field of agricultural machines, the use of said limiters is essentially indispensable in order to protect both the motion transmission elements and the elements that receive motion therefrom against peak overloads caused by the heavy duty to which said machines are usually subjected and by the onset of resisting torques.

Conventional limiters, disclosed for example in European Patent 543,142, in US Patent 2,238,583 and in French Patent 8,806,398 (FR patent 2615256), substantially consist of a cylindrical body which forms a cup-shaped seat at one end and a fork for the articulation of a universal joint at the other end.

Inside the seat there is provided a plurality of pawls which are interposed radially between the motion transmission shaft so that they can slide radially with respect to the shaft under the thrust of preadjusted springs which keep them engaged with retention slots formed in the inside walls of said seat. This interlock maintains the normal coupling between the transmission shaft and the driven shaft through the joint.

When the transmitted torque, i.e., the reaction torque of the driven shaft, exceeds the total value of the thrust force of the springs, the pawls are pushed back so as to retract centripetally, disengaging the slots and thus allowing one of the two shafts to rotate with respect to the other.

This action produces a stepped slippage which persists until the value of the resisting torque returns below the total value of the thrust force of the springs that act on the pawls. In this case, the springs overcome the force that tends to make the pawls retract again; since the pawls restore the rigidity of the engagement with the slots, they accordingly restore the direct connection between the driving shaft and the driven shaft.

The conventional limiters, though offering a substantially satisfactory performance, suffer the drawback that it is not possible to adjust their intervention threshold unless one either replaces every time all the springs with others having preset characteristics according to the operating requirements or opens the body of the limiter and readjusts the springs.

Thus, both operations require the complete or partial disassembly and reassembly of the limiter in order to replace or readjust the springs, with a consequent great expenditure of time and energy.

A torque limiting coupling as set forth in the preamble of claim 1, is known from document FR-A-2 429 929.

The aim of the present invention is to solve the above problems of the prior art by providing a torque limiting coupling with adjustable intervention threshold which allows to perform the adjustments required to modify its intervention threshold without having to perform time-consuming disassemblies and troublesome replacements.

An object of the present invention is to provide a torque limiting coupling with adjustable intervention threshold which allows to perform a particular and successive refinement of the adjustments meant to determine the value of the threshold.

This aim, this object and others which will become apparent hereinafter are achieved by a torque limiting coupling with adjustable intervention threshold according to the invention and having the features of claim 1.

Further characteristics and advantages of the present invention will become apparent from the description of a preferred embodiment of a torque limiting coupling with adjustable intervention threshold, illustrated only by way of non-limitative example in the accompanying drawings, wherein:
Figure 1 is a vertical sectional view of the torque limiting coupling according to a first embodiment, shown for illustrating purposes and which does not form part of the claimed invention;
Figure 2 is a corresponding transverse sectional view thereof, taken along the plane II-II of figure 1, in which one half illustrates the torque transmitting configuration and the other half illustrates the torque limiting configuration;
Figure 3 is a schematic sectional view of a pusher means in a first embodiment, not according to the invention;
Figure 4 is a corresponding plan view of the pusher means;

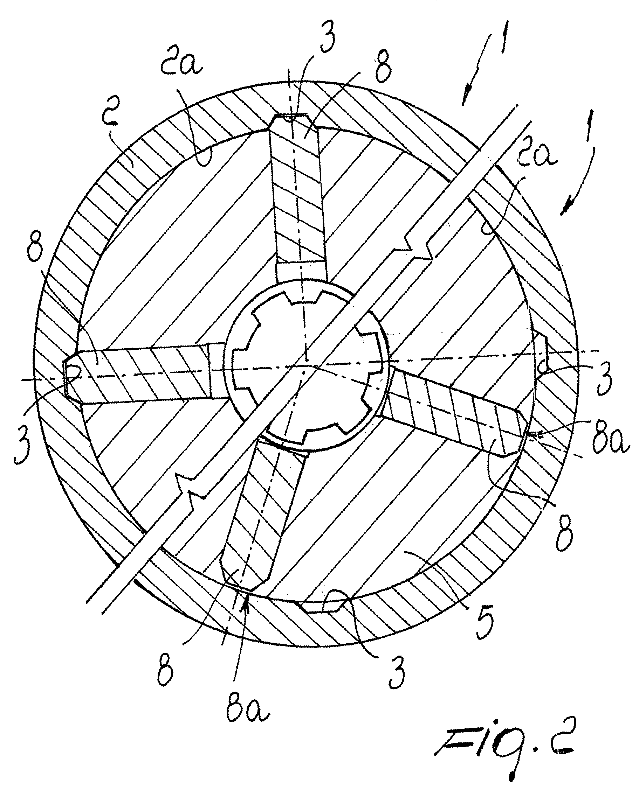

Figure 5 is a side view of a pin which is part of the externally adjustable elastic elements;
Figure 6 is another side view of a pin which is part of externally adjustable elastic elements in a second embodiment, not according to the invention;
Figure 7 is a detail view of an embodiment of externally adjustable elastic elements;
Figure 8 is an enlarged-scale detail view of the contact between a pawl which is part of the coupling and a presser means;
Figure 9 is a sectional view, taken along a vertical plane, of one half of the coupling in the torque limiting configuration;

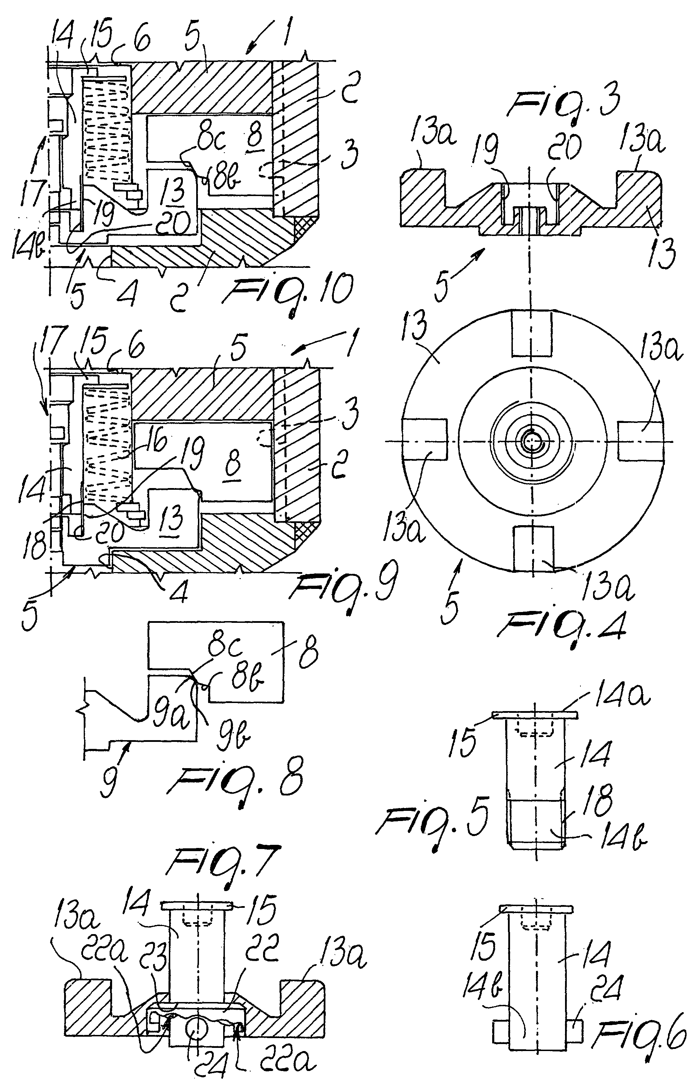

Figure 10 is a corresponding view of figure 9, in the configuration for normal torque transmission;
Figure 11 is a vertical sectional view of a further embodiment of the torque limiting coupling which constitutes the invention claimed, provided with elements for refining the intervention threshold value;
Figure 12 is a corresponding transverse sectional view thereof.

With particular reference to the above figures, 1 generally designates a torque limiting coupling with adjustable intervention threshold, which substantially comprises a hollow cylindrical body 2 in the inner walls 2a whereof at least two slots 3 parallel to the longitudinal axis of said body 2 are defined.

The body defines, on the bottom of the cavity, a first central opening 4 which can be protected by a corresponding cover 4a; a substantially solid cylindrical hub 5 can be inserted snugly in said cavity so as to form a pack-like assembly and is retained in the body 2 so that it can rotate through adapted means 2b of a conventional type.

Like the body 2, the hub 5 also defines, in turn, a second opening 6 through which it is possible to reach the adjustable elastic elements described hereinafter.

A plurality of radially orientated recesses 7 is cut into the hub 5, which has, on its outward face, a set of hollow threaded seats 5a for the coupling of driving or driven means. The recesses 7 can slidingly accommodate, so that they are guided, corresponding pawls 8 which are adapted to engage the slots 3 in the configuration for normal torque transmission.

The pawls 8 are in turn placed in contact with a presser means 9, which is retained in forced contact therewith under the thrust of elastic elements, designated by 10, which can be adjusted from outside through the first opening 4 and the second opening 6 after removing the respective mentioned covers 4a and 6a.

The slots 3 have a cross-section shaped like an isosceles trapezoid, in which the longer parallel side is open and directed towards the center of the cylindrical body 2. The number of the slots is preferably but not necessarily equal to the number of the pawls 8 and of the corresponding recesses 7, which are formed along perpendicular diameters of the hub 5.

In the pawls 8, the side 8a for engaging the slots 3 replicates, with a convex profile, the trapezoidal cross-section of the slots. Moreover, the surfaces 8b and 8c for mutual contact with the opposite surfaces 9a, 9b of the presser means 9 are shaped so as to split the resultant of the forces into components having preset directions, particularly radial ones. In greater detail, the surfaces 8b and 8c have generatrices which form an obtuse angle.

The presser means 9 is substantially constituted by a circular plate 13 which is mounted, so that it can be moved coaxially, inside the hollow cylindrical body 2 and is peripherally provided with a plurality of teeth 13a, each of which is arranged at a pawl 8.

The adjustable elastic elements 10 comprise a pin 14 whose head is provided with a wider rim 15 and can be associated in an axial position which is adjustable with the elastic elements 10 which can be accessed from the outside through the openings 4 and/or 6. The pin 14 is perpendicular to, and centered in, the plate 13 and has, at its head and at its base 14b, respective notches 14c which are arranged along parallel diameters.

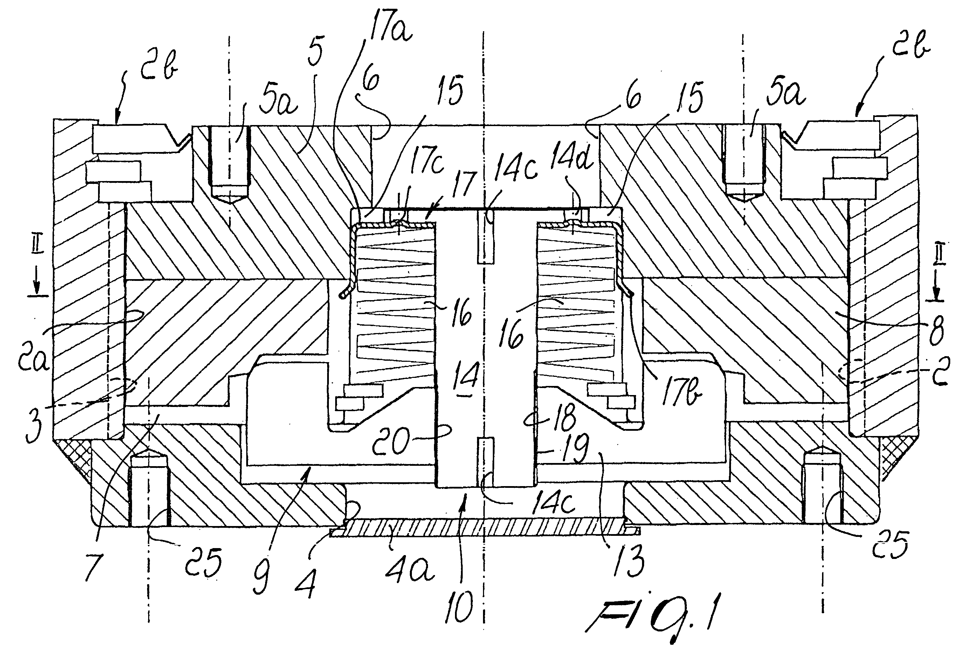

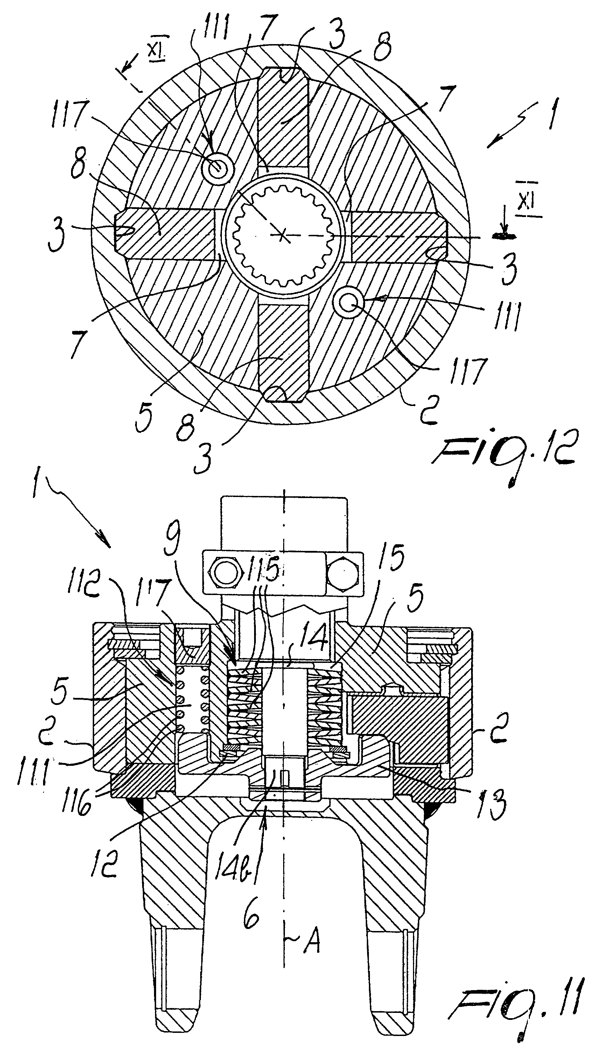

A plurality of springs 16 (in figure 1) and 115 (in figure 11) of the Belleville washer type is fitted on the pin 14; the springs are stacked in a pack between the head 15 and the plate 13, where they bear onto a ring shoulder 12 provided at the hub 5, and are part of said elements 10. Locking means 17 are also provided to prevent the unscrewing of the pin 14. Said means consist of a split pin 17a shaped like an inverted cup and interposed between the rim 15 and the uppermost Belleville washer 16.

The lower wing 17b of said split pin 17a diverge slightly outwards and can be inserted in the recesses 7. Furthermore, the bottom of the split pin 17a has a plurality of protrusions 17c which are adapted to engage corresponding hollow indents 14d formed in said rim 15.

The elements 10 can be constituted by a screw coupling, in which a first thread 18 is formed at the base 14b of the pin 14 to allow the screwing thereof in a complementary thread 19 defined in a hollow seat 20 centered in the plate 13 and adapted to receive said base 14b.

In another alternative embodiment, the elastic elements 10 can be constituted by a ring 22 which defines, on one face, a plurality of pairs of concave sectors 22a with staggered planes, and is accommodated in a corresponding seat 23 formed centrally in the back of the plate 13.

The seat 23 has a partial through opening for the base 14b of the pin 14 which can be provided, once passage has occurred, with a transverse key 24 adapted to engage the sectors 22 selected after rotating the pin 14.

In the further embodiment shown in figures 11 and 12, which constitutes the invention claimed, in the cylindrical hub 5 there are provided at least two through seats 111 which are parallel to the axis A of said hub and in which it is possible to accommodate corresponding elastic means 112 which can also be adjusted from outside and are antagonists of the presser means 9 constituted by the circular plate 13.

In order to provide a good balancing of the hub 5, said seats 111 are provided so as to be diametrically opposite with respect to said central axis A.

The elastic means 112 consist of corresponding helical compression springs 116, each of which is snugly inserted in its own seat 111 and is provided with a corresponding end which rests directly on the perimeter of the plate 13 and with an opposite end which rests on the lower faces of screw means which can be micrometrically screwed into said seats 111 and are substantially constituted by grub screws 117.

The operation of the invention is as follows.

In the normal torque transmission configuration, the pawls 8 are inserted in the slots 3 and the body 2 and the hub 5 rotate rigidly.

By acting on the pin 14 through one of the openings 4 or 6, it is possible to change the axial compression load on the Belleville washers 16 so as to correspondingly change the value of the force that they exchange with the plate 13, which is in contact with the pawls 8.

In practice, the action on the pin 14 consists in inserting the tip of a screwdriver in one of the notches 14c and in screwing it more or less deeply into the seat 20. In this manner, the springs 16 are compressed between the head 14a and the plate 13.

Once said adjustment has been completed, the pin 14 is locked through the means 17 so that it cannot unscrew accidentally. The split pin 17a, during the screwing of the pin 14, in fact remains rotationally fixed and is retained by the rims 17b inserted in the recesses 7, while the hollow seats 14d move in a ratchet-like fashion beyond the protrusions 17c, exploiting the elasticity of the bottom of said split pin. Once the chosen position has been reached, the engagement between the hollow recesses 14d and the protrusions 17c prevents the accidental unscrewing of the pin 14.

In a second solution provided in order to vary the preloading of the springs 16 and therefore the intervention threshold of the torque limiting coupling 1, the pin 14, after being inserted through the seat 23 and provided with the transverse key 24, is rotated so that said key engages, by resting against it, one of the pairs of sectors 22a defined on staggered planes in the ring 22. By doing so, the pin 14 moves axially and again compresses the springs 16 between the head 14a and the plate 13 with values whose intensity can vary according to the pair of sectors 22a that has been selected.

In this case too, means 17 for preventing unscrewing are used.

It is also possible to micrometrically refine the value of the intervention threshold of the coupling 1, once the coarse adjustment has been set according to the above described procedure, by acting on the grub screws 117. By screwing the grub screws, the springs 116 are gradually compressed and, in this case, become antagonists of the Belleville washers 115, proportionally contrasting the action thereof as the screwing of the grub screws 117 is increased, once again by acting from outside.

If the grub screws 117 are instead unscrewed, in the extreme case, the complete unloading of the springs 116, which become ineffective in this case, is achieved.

Both the hub 5 and the hollow cylindrical body 2 are provided with threaded holes of their own, designated by the reference numerals 5a and 25 respectively, for the coupling of conventional driving and driven elements such as, for example, a spline for the engagement of a shaft and, at the opposite end, a fork for the articulation of a universal joint, all being commonly used in agricultural applications.

If, for example, during the operation of an agricultural machine provided with a soil treatment tool and with the limiter 1 inserted between the tool and the machine, the tool encounters an obstacle, the torque that contrasts motion increases. This leads to a stress which the body 2 discharges onto the pawls 8 through contact with the slots 3 in which the pawls are inserted.

The pawls 8 oppose a resistance whose absolute value is equal to the value of the radial component of the contact force that is exchanged between the surfaces 8b and 9a. Said force, as mentioned above, is adjustable by acting on the pin 14 through one of the openings 4 or 6 and preloading the springs 16, optionally refining it by acting on the grub screws 117.

If the above mentioned resisting torque exceeds, in terms of absolute value, said component, the pawls 8 are repelled centripetally from the body 2 and, by retracting into the hollows 7, exit from the slots 3. In this configuration, the hub 5 and the body are uncoupled one another. In practice, the hub 5 can thus rotate inside the body 2 without transmitting any appreciable torque, thus automatically uncoupling the driving shaft of the machine and the driven transmission shaft of the tool.

During this configuration for limiting transmitted torque, each time the pawls 8, by rotating together with the hub 5 inside the body 2, pass at the slots 3, an impact occurs, producing a corresponding torque impulse between the body 2 and the hub 5 which tends to spontaneously restore the coupling between the pawls 8 and the slots 3.

The succession of the impulses, combined with the possible elimination of the cause that determines the resisting torque, and with a consequent gradual decrease in the rotation rate of the moving parts, facilitates a new interlock between the pawls 8 and the slots 3 and the consequent restoring of the normal transmission of torque between the machine and the tool.

It has thus been observed that the invention achieves the intended aim and objects, i.e., it allows to adjust the intervention threshold of the torque limiting coupling directly from the outside, without having to disassemble the limiter for each different use for which it is to be employed.

In the practical execution of the invention, the materials used, as well as the shapes and the dimensions, may be any according to requirements without thereby abandoning the scope of the protection of the appended claims.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A torque limiting coupling with adjustable intervention threshold, comprising: a hollow cylindrical body (2) in the inner walls (2a) whereof at least two slots (3) parallel to the longitudinal axis (A) of the body (2) are defined; a solid cylindrical hub (5), which is rotationally retained in said hollow body (2) by way of retaining elements (2b) and which defines a plurality of radial recesses (7) for the slidingly guided accommodation of corresponding pawls (8) for engaging said slots (3); a presser means (9, 13) for said pawls (8), which is retained in forced contact therewith by first adjustable elastic means (10, 16, 115) which are adjustable from outside for setting a threshold value of the torque limiting coupling (1), said pawls (8) engaging, in the torque transmission configuration, said corresponding slots (3) and disengaging them, with a centripetal motion into the corresponding recesses (7), in the torque limiting configuration, **characterized in that** it further comprises second adjustable elastic means (112), which are antagonist of said presser means (9), for micrometrically refining the threshold value of the torque limiting coupling (1), said first (10, 16, 115) and second adjustable elastic means (112) being adjustable from outside said coupling (1) through corresponding axial openings (4, 6) formed in said hollow body (2) and/or hub (5).

2. A coupling according to claim 1, **characterized in that** said hollow cylindrical body (2) and said solid hub (5) are both provided with means (5a, 25) for coupling driving and driven elements.

3. A coupling according to claim 2, **characterized in that** said coupling means are constituted by a plurality of threaded hollow seats (5a, 25) for the screwing of corresponding bolts for fastening said driving and driven elements.

4. A coupling according to claim 1, **characterized in that** it comprises four slots (3) defined at the four diametrical poles of said hollow body (2).

5. A coupling according to claim 4, **characterized in that** said slots (3) have a cross-section shaped like an isosceles trapezoid in which the longer parallel side is directed towards the center of said cylindrical hollow body (2).

6. A coupling according to claim 4, **characterized in that** the number of said slots (3) is equal to the number of the pawls (8) and of the corresponding recesses (7), said recesses (7) being formed along perpendicular diameters of said hub (5).

7. A coupling according to the preceding claims, **characterized in that** in said pawls (8) the side for engagement with said slots (3) convexly replicates the trapezoidal cross-section of said slots (3) and the surfaces (8b, 8c) for contact with said presser means (9) are shaped so as to split the resultant of the mutual contact forces into components having preset directions.

8. A coupling according to claim 7, **characterized in that** said contact surfaces (8b, 8c) are arranged with respect to each other so that their generatrices form an obtuse angle.

9. A coupling according to claim 1, **characterized in that** said presser means (9) is constituted by a circular plate (13) mounted so that it can be moved coaxially inside said hollow cylindrical body (2) and peripherally provided with a plurality of teeth (13a) arranged at said pawls (8).

10. A coupling according to claim 9, **characterized in that** said adjustable elastic elements (10) comprise: a pin (14) whose head (14a) has a wider rim (15) and which is associable, in an adjustable axial position, with corresponding axial position adjusting means (14c, 18, 19, 20, 22, 24) which can be accessed from outside through said openings (4, 6), said pin (14) being centered at right angles in said plate (13); a plurality of Belleville compression washers (16) stacked in a pack and fitted on said pin (14) between the head (14a) and the plate (13) so as to bear on a ring shoulder (12) provided at the hub (5); and a locking means (17) for preventing uncoupling of said pin (14) from said plate (13).

11. A coupling according to claim 10, **characterized in that** said head (14a) of the pin (14) and the base end (14b) thereof are affected respectively by a transverse notch (14c) arranged along a diameter for the engagement of an adjustment tool through said openings (4, 6).

12. A coupling according to claim 11, **characterized in that** the wider rim (15) of said pin head (14a) is affected by a plurality of concave indents (14d) for the elastic coupling of said uncoupling prevention means (17).

13. A coupling according to claim 12, **characterized in that** said uncoupling prevention means (17) consist of a split pin (17a), which is shaped like an inverted cup and is interposed between said head (14a) and the uppermost one of said Belleville washers (16), its lower flaps (17b) being slightly divaricated for insertion in said recesses (7), the bottom of said split pin (17a) having corresponding raised portions (17c) for engagement in said indents (14d).

14. A coupling according to claim 10, **characterized in that** said axial position adjusting means (14c, 18, 19, 20) for axially adjusting the position of said pin (14) are constituted by a screw coupling, a first thread (18) being formed at the base (14b) of said pin (14) for screwing into a second thread (19) formed in a hollow seat (20) which is centered in said plate (13) and is adapted to receive said base (14b).

15. A coupling according to claim 8, **characterized in that** said axial position adjusting means (22, 24) are constituted by a ring (22) with concave sectors (22a) with staggered planes, which is located in a corresponding seat (23) formed centrally on the back of said plate (13) and having a partial through opening, said sectors (22a) being rotationally engageable with a key (24) which is inserted transversely with respect to the base (14b) of said pivot (14) which can slide axially in said through opening.

16. A coupling according to the preceding claims, **characterized in that** at least two through seats (111) parallel to the axis (A) of the hub (5) are defined in said solid cylindrical hub (5) and accommodate said second adjustable elastic means (112) which can be adjusted from outside and are antagonists for said pawl presser means (9).

17. A coupling according to claim 16, **characterized in that** said seats (111) are defined in diametrically opposite positions with respect to the central axis (A) of said cylindrical hub (5).

18. A coupling according to claim 16 or claim 17, **characterized in that** said second adjustable elastic means (112) are constituted by helical compression springs (116) each of which is snugly inserted in a corresponding seat (111), one end of said springs (116) resting directly on said presser means (9), the opposite ends resting on the lower face of screw means (117) which can be micrometrically screwed into said seats (117).

19. A coupling according to claim 18, **characterized in that** said screw means are constituted by so-called grub screws (117).

## Patentansprüche

1. Drehmomentbegrenzungskupplung mit steuerbarer Drehmomentbegrenzung, mit einem hohlen zylindrischen Körper (2), in dessen Innenwänden (2a) mindestens zwei Schlitze (3) parallel zur Längsachse (A) des Körpers (2) ausgebildet sind, mit einer festen zylindrischen Nabe (5), welche drehbar in dem hohlen Körper (2) mittels Rückhalteelementen (2b) gehalten ist und welche eine Vielzahl radialer Aussparungen (7) für die Gleitführungsaufnahme korrespondierender Klinken (8) zum Eingriff in die Schlitze (3) bildet, mit einem Schubmittel (9, 13) für die Klinken (8), das mit diesen in Zwangskontakt durch erste einstellbare elastische Mittel (10, 16, 115) gehalten ist, die zum Einstellen eines Grenzwerts der Drehmomentbegrenzungskupplung (1) von außen einstellbar sind, wobei die Klinken (8) im Drehmomentübertragungszustand in korrespondierende Schlitze (3) eingreifen und im Drehmomentbegrenzungszustand aus diesen, mit einer nach zentrisch innen gerichteten Bewegung in die korrespondierenden Aussparungen (7) ausrücken, **dadurch gekennzeichnet, dass** sie des Weiteren zweite einstellbare elascische Mittel (112) für die mikrometrische Feineinstellung des Grenzwerts der Drehmomentbegrenzungskupplung (1) aufweist, die zum Schubmittel (9) entgegengesetzt wirken, wobei die ersten (10, 16, 115) und zweiten einstellbaren elastischen Mittel (112) von der Außenseite der Kupplung (1) durch entsprechende axiale Öffnungen (4, 6), die in dem hohlen Körper (2) und/oder der Nabe (5) gebildet sind, einstellbar sind.

2. Kupplung nach Anspruch 1, **dadurch gekennzeichnet, dass** der hohle zylindrische Körper (2) und die feste Nabe (5) mit Mitteln (5a, 25) zum Verbinden von antreibenden und angetriebenen Elementen versehen sind.

3. Kupplung nach Anspruch 2, **dadurch gekennzeichnet, dass** die Verbindungsmittel aus einer Vielzahl von hohlen Gewindesitzen (5a, 25) zum Anschrauben korrespondierender Bolzen zum Befestigen der antreibenden und angetriebenen Elemente bestehen.

4. Kupplung nach Anspruch 1, **dadurch gekennzeichnet, dass** sie vier Schlitze (3) aufweist, die an den vier diametralen Polen des hohlen Körpers (2) gebildet sind.

5. Kupplung nach Anspruch 4, **dadurch gekennzeichnet, dass** die Schlitze (3) einen Querschnitt aufweisen, der als gleichschenkliges Trapez ausgebildet ist, bei dem die längere der parallelen Seiten zur Mitte des zylindrischen Hohlkörpers (2) gerichtet ist.

6. Kupplung nach Anspruch 4, **dadurch gekennzeichnet, dass** die Anzahl der Schlitze (3) gleich der Anzahl der Klinken (8) und der korrespondierenden Aussparungen (7) ist, wobei die Aussparungen (7) entlang senkrecht stehender Durchmesser der Nabe (5) gebildet sind.

7. Kupplung nach den vorstehenden Ansprüchen, **dadurch gekennzeichnet, dass** bei den Klinken (8) die Eingriffsseite mit den Schlitzen (3) dem trapezförmigen Querschnitt der Schlitze (3) konvex nachgebildet ist und die Oberflächen (8b, 8c) für einen Kontakt mit dem Schubmittel (9) so geformt sind, dass die Resultierende der gegenseitigen Kontaktkräfte in Komponenten mit vorbestimmten Richtungen aufgeteilt ist.

8. Kupplung nach Anspruch 7, **dadurch gekennzeichnet, dass** die Kontaktflächen (8b, 8c) derart zueinander angeordnet sind, dass ihre Mantellinien einen stumpfen Winkel bilden.

9. Kupplung nach Anspruch 1, **dadurch gekennzeichnet, dass** das Schubmittel (9) aus einer kreisförmigen Platte (13) gebildet ist, die so eingesetzt ist, dass sie koaxial im Inneren des hohlen zylindrischen Körpers (2) bewegbar und entlang des Umfangs mit einer Vielzahl von Zähnen (13a) versehen ist, die an den Klinken (8) angeordnet sind.

10. Kupplung nach Anspruch 9, **dadurch gekennzeichnet, dass** die einstellbaren elastischen Elemente (10) Folgendes aufweisen: einen Bolzen (14), dessen Kopf (14a) einen größeren Rand (15) aufweist und der in einer einstellbaren axialen Lage mit korrespondierenden Axiallagen-Einstellungsmitteln (14c, 18, 19, 20, 22, 24), die von außen durch die Öffnungen (4, 6) zugänglich sind, in Verbindung gebracht werden kann, wobei der Bolzen (14) in rechten Winkeln zentriert zur Platte (13) angeordnet ist; eine Vielzahl von Tellerdruckfedern (16), die als Paket zusammengefasst und auf den Bolzen (14) zwischen dem Kopf (14a) und der Platte (13) eingesetzt sind, so dass sie an einer Ringschulter (12), die an der Nabe (5) vorgesehen ist, anliegen; und ein Verriegelungsmittel (17) zur Vermeidung eines Loslösens des Bolzens (14) von der Platte (13).

11. Kupplung nach Anspruch 10, **dadurch gekennzeichnet, dass** der Kopf (14a) des Bolzens (14) und dessen Bodenende (14b) jeweils eine transversal angeordnete Aussparung (14c) aufweisen, die entlang eines Durchmessers für den Eingriff eines Einstellwerkzeugs durch die Öffnungen (4, 6) angeordnet ist.

12. Kupplung nach Anspruch 11, **dadurch gekennzeichnet, dass** der größere Rand (15) des Bolzenkopfs (14a) eine Vielzahl von konkaven Vertiefungen (14d) zum elastischen Verbinden der Mittel (17) zur Vermeidung des Loslösens aufweist.

13. Kupplung nach Anspruch 12, **dadurch gekennzeichnet, dass** die Mittel (17) zur Vermeidung des Loslösens aus einem Splint (17a) bestehen, der ähnlich einer invertierten Tasse geformt ist und sich in Zwischenlage zwischen dem Kopf (14a) und der am weitesten außen liegenden Tellerfeder (16) befindet, wobei dessen untere Laschen (17b) zum Einsetzen in die Aussparungen (7) leicht ausgestellt sind und dessen Boden (17a) entsprechende Erhebungsbereiche (17c) zum Eingriff in die Vertiefungen (14d) aufweist.

14. Kupplung nach Anspruch 10, **dadurch gekennzeichnet, dass** die Axiallagen-Einstellungsmittel (14c, 18, 19, 20) für ein axiales Einstellen der Lage des Bolzens (14) aus einer Schraubenverbindung gebildet sind, wobei ein erstes Gewinde (18) am Bodenbereich (14b) des Bolzens (14) zum Einschrauben in ein zweites Gewinde (19) gebildet ist, das in einem hohlen Sitz (20) gebildet ist, der in der Platte (13) zentrisch angeordnet und zur Aufnahme des Bodenbereichs (14b) ausgebildet ist.

15. Kupplung nach Anspruch 8, **dadurch gekennzeichnet, dass** die Axiallagen-Einstellungsmittel (22, 24) aus einem Ring (22) mit konkaven Bereichen (22a) mit gestaffelten Ebenen bestehen, der in einem korrespondierenden Sitz (23), der zentral auf der Rückseite der Platte (13) ausgebildet ist, angeordnet ist und bereichsweise eine Durchführungsöffnung aufweist, wobei die Bereiche (22a) in einen Querkeil (24) drehbar eingreifbar sind, der transversal im Bodenbereich (14b) des Bolzens (14) eingesetzt ist, der in axialer Richtung in der Durchführungsöffnung gleiten kann.

16. Kupplung nach den vorstehenden Ansprüchen, **dadurch gekennzeichnet, dass** wenigstens zwei Durchführungssitze (111) parallel zur Achse (A) der Nabe (5) in der festen zylindrischen Nabe (5) gebildet sind und die zweiten elastischen Einstellmittel (112) aufnehmen, die von außen einstellbar sind und zu den Klinkenschubmitteln (9) entgegengesetzt wirken.

17. Kupplung nach Anspruch 16, **dadurch gekennzeichnet, dass** die Sitze (111) in diametral gegenüberliegenden Lagen mit Bezug auf eine zentrische Achse (A) der zylindrischen Nabe (5) angeordnet sind.

18. Kupplung nach Anspruch 16 oder 17, **dadurch gekennzeichnet, dass** die zweiten elastischen Einstellmittel (112) durch Schraubendruckfedern (116) gebildet sind, von denen jede eng anliegend in korrespondierende Sitze (111) eingesetzt ist, wobei ein Ende der Federn (116) direkt auf dem Schubmittel (9) aufliegt und die entgegengesetzten Enden auf der unteren Oberfläche der Schraubenmittel (117), die mikrometrisch in die Sitze (117) eingeschraubt werden können, aufliegen.

19. Kupplung nach Anspruch 18, **dadurch gekennzeichnet, dass** die Schraubenmittel durch sog. Madenschrauben (117) gebildet sind.

## Revendications

1. Accouplement limiteur de couple à seuil d'intervention réglable, comprenant : un corps cylindrique creux (2) dans les parois intérieures (2a) duquel au moins deux rainures (3) parallèles à l'axe longitudinal (A) du corps (2) sont définies ; un moyeu cylindrique plein (5) qui est retenu en rotation dans le dit corps creux (2) au moyen d'éléments de retenue (2b) et qui définit une pluralité de logements radiaux (7) pour la réception guidée de façon coulissante de cliquets correspondants (8) prévus pour venir en prise avec les dites rainures (3) ; un dispositif de pression (9, 13) pour les dits cliquets (8), qui est retenu en contact forcé avec ces derniers par des premiers moyens élastiques réglables (10, 16, 115) qui sont réglables de l'extérieur pour établir une valeur de seuil de l'accouplement limiteur de couple (1), les dits cliquets (8) étant en prise, dans la configuration de transmission de couple, avec les dites rainures correspondantes (3) et se dégageant de celles-ci par un mouvement centripète dans les logements correspondants (7) dans la configuration de limitation de couple, **caractérisé en ce qu'**il comprend en outre des deuxièmes moyens élastiques réglables (112) qui sont antagonistes du dit dispositif de pression (9), pour affiner micrométriquement la valeur de seuil de l'accouplement limiteur de couple (1), les dits premiers (10, 16, 115) et deuxièmes (112) moyens élastiques réglables étant ajustables de l'extérieur du dit accouplement (1) à travers des ouvertures axiales correspondantes (4, 6) ménagées dans le dit corps creux (2) et/ou le dit moyeu (5).

2. Accouplement selon la revendication 1, **caractérisé en ce que** le dit corps cylindrique creux (2) et le dit moyeu plein (5) comportent tous deux des moyens (5a, 25) de couplage d'un élément d'entraînement et d'un élément entraîné.

3. Accouplement selon la revendication 2, **caractérisé en ce que** les dits moyens de couplage sont constitués par une pluralité de sièges creux taraudés (5a, 25) pour le vissage de boulons correspondants de fixation des dits éléments d'entraînement et entraîné.

4. Accouplement selon la revendication 1, **caractérisé en ce qu'**il comprend quatre rainures (3) définies aux quatre pôles diamétraux du dit corps creux (2).

5. Accouplement selon la revendication 4, **caractérisé en ce que** les dites rainures (3) ont une section transversale trapézoïdale isocèle dans laquelle le plus long côté parallèle est tourné vers le centre du dit corps creux cylindrique (2).

6. Accouplement selon la revendication 4, **caractérisé en ce que** le nombre de dites rainures (3) est égal au nombre des cliquets (8) et des logements correspondants (7), les dits logements (7) étant formés le long de diamètres perpendiculaires du dit moyeu (5).

7. Accouplement selon les revendications précédentes, **caractérisé en ce que**, dans les dits cliquets (8), le côté venant en prise avec les dites rainures (3) reproduit de façon convexe la section transversale trapézoïdale des dites rainures (3), et les surfaces (8b, 8c) de contact avec le dit dispositif de pression (9) sont configurées de manière à décomposer la résultante des forces de contact mutuel en composantes ayant des directions prédéterminées.

8. Accouplement selon la revendication 7, **caractérisé en ce que** les dites surfaces de contact (8b, 8c) sont disposées l'une par rapport à l'autre de sorte que leurs génératrices forment un angle obtus.

9. Accouplement selon la revendication 1, **caractérisé en ce que** le dit dispositif de pression (9) est constitué par une plaque circulaire (13) montée de sorte qu'elle peut être déplacée coaxialement à l'intérieur du dit corps cylindrique creux (2) et elle comporte périphériquement une pluralité de dents (13a) agencées à l'endroit des dits cliquets (8).

10. Accouplement selon la revendication 9, **caractérisé en ce que** les dits éléments élastiques réglables (10) comprennent: une tige (14) dont la tête (14a) a un rebord plus large (15) et qui peut être associée, dans une position axiale réglable, à un dispositif de réglage de position axiale correspondant (14c, 18, 19, 20, 22, 24) auquel on peut accéder de l'extérieur à travers les dites ouvertures (4, 6), la dite tige (14) étant centrée perpendiculairement dans la dite plaque (13) ; une pluralité de rondelles de compression Belleville (16) empilées en un ensemble et montées sur la dite tige (14) entre la tête (14a) et la plaque (13) de façon à prendre appui sur un épaulement annulaire (12) prévu sur le moyeu (5) ; et un moyen de verrouillage (17) empêchant la dite tige (14) de se séparer de la dite plaque (13).

11. Accouplement selon la revendication 10, **caractérisé en ce que** la dite tête (14a) de la tige (14) et son extrémité inférieure (14b) sont affectées respectivement par une encoche transversale (14c) formée le long d'un diamètre, pour la réception d'un outil de réglage introduit à travers les dites ouvertures (4, 6).

12. Accouplement selon la revendication 11, **caractérisé en ce que** le rebord plus large (15) de la dite tête de tige (14a) comporte une pluralité d'indentations concaves (14d) pour le couplage élastique du dit moyen de verrouillage (17) empêchant la séparation.

13. Accouplement selon la revendication 12, **caractérisé en ce que** le dit moyen empêchant la séparation (17) consiste en une tige fendue (17a) qui est en forme de coupelle inversée et qui est interposée entre la dite tête (14a) et la rondelle supérieure des dites rondelles Belleville (16), ses rabats inférieurs (17b) étant légèrement déviés pour insertion dans les dits logements (7), la base de la dite tige fendue (17a) ayant des parties surélevées correspondantes (17c) pour engagement dans les dites indentations (14d).

14. Accouplement selon la revendication 10, **caractérisé en ce que** les dits moyens de réglage de position axiale (14c, 18, 19, 20) pour régler axialement la position de la dite tige (14) sont constitués par une connexion vissée, un premier filetage (18) étant formé à la base (14b) de la dite tige (14) pour vissage dans un deuxième filetage (19) formé dans un siège creux (20) qui est centré dans la dite plaque (13) et peut recevoir la dite base (14b).

15. Accouplement selon la revendication 8, **caractérisé en ce que** les dits moyens de réglage de position axiale (22, 24) sont constitués par un anneau (22) à secteurs concaves (22a) dans des plans décalés, qui est logé dans un siège correspondant (23) formé centralement au dos dé la dite plaque (13) et ayant un trou traversant partiel, les dits secteurs (22a) pouvant venir en prise en rotation avec une clé (24) qui est insérée transversalement par rapport à la base (14b) de la dite tige (14) et qui peut coulisser axialement dans le dit trou traversant.

16. Accouplement selon les revendications précédentes, **caractérisé en ce qu'**au moins deux sièges traversants (111) parallèles à l'axe (A) du moyeu (5) sont définis dans le dit moyeu cylindrique plein (5) et reçoivent les dits deuxième moyens élastiques réglables (112) qui peuvent être réglés de l'extérieur et s'opposent au dit dispositif de pression à cliquet (9).

17. Accouplement selon la revendication 16, **caractérisé en ce que** les dits sièges (111) sont définis à des positions diamétralement opposées par rapport à l'axe central (A) du dit moyeu cylindrique (5).

18. Accouplement selon la revendication 16 ou la revendication 17, **caractérisé en ce que** les dits deuxièmes moyens élastiques réglables (112) sont constitués par des ressorts hélicoïdaux de compression (116) dont chacun est inséré à frottement doux dans un siège correspondant (111), une extrémité des dits ressorts (116) reposant directement sur le dit dispositif de pression (9), l'extrémité opposée reposant sur la face inférieure d'une vis (117) qui peut être vissée micrométriquement dans les dits sièges (117).

19. Accouplement selon la revendication 18, **caractérisé en ce que** les dites vis sont constituées par des vis dites sans tête (117).
